(19) Europäisches Patentamt / European Patent Office / Office européen des brevets

(11) **EP 4 791 068 A1**

(12) **EUROPEAN PATENT APPLICATION**
published in accordance with Art. 153(4) EPC

(43) Date of publication:
**12.08.2026 Bulletin 2026/33**

(21) Application number: **24886027.2**

(22) Date of filing: **20.09.2024**

(51) International Patent Classification (IPC):
***H04W 24/08*** *(2009.01)* ***H04W 24/10*** *(2009.01)*
***H04W 76/15*** *(2018.01)* ***H04L 41/5067*** *(2022.01)*

(52) Cooperative Patent Classification (CPC):
**H04L 41/5067; H04W 24/08; H04W 24/10; H04W 76/15**

(86) International application number:
**PCT/KR2024/014166**

(87) International publication number:
**WO 2025/095349 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 KR 20230149603**

(71) Applicant: **Samsung Electronics Co., Ltd.**
**Suwon-si, Gyeonggi-do 16677 (KR)**

(72) Inventors:
- **JEONG, Seungbeom**
  **Suwon-si Gyeonggi-do 16677 (KR)**
- **JUNG, Sangyeob**
  **Suwon-si Gyeonggi-do 16677 (KR)**

(74) Representative: **Nederlandsch Octrooibureau**
**P.O. Box 29720**
**2502 LS The Hague (NL)**

(54) **METHOD AND APPARATUS FOR TRANSMITTING AND RECEIVING QOE MEASUREMENT CONFIGURATION INFORMATION BETWEEN DUAL ACCESS BASE STATIONS IN COMMUNICATION SYSTEM**

(57) The present disclosure relates to a 5G or 6G communication system for supporting higher data transmission rates. The present disclosure can be applied to intelligent services (for example, smart homes, smart buildings, smart cities, smart cars or connected cars, healthcare, digital education, retail businesses, security- and safety-related services, and the like) on the basis of 5G communication technology and IoT-related technology. More specifically, the present disclosure relates to a method performed by a terminal in a wireless communication system, the method comprising the steps of: receiving configuration information related to a quality of experience (QoE) measurement configuration, wherein the QoE measurement configuration includes first information indicating a signaling radio bearer (SRB) over which a QoE measurement report related to the QoE measurement configuration is transmitted and second information instructing the terminal to report information about a start or end of a measurement session related to the QoE measurement configuration; and transmitting, to a first node associated with an SRB indicated by the first information, the QoE measurement report including information about the start or end of the measurement session related to the QoE measurement configuration, wherein the information about the start or end of the measurement session related to the QoE measurement configuration may be forwarded to a second node associated with the first node on the basis of dual connectivity (DC).



Processed by Luminess, 75001 PARIS (FR)

(Cont. next page)

610
gNB
RRC
PDCP
RLC
MAC
PHY
SRB 0/1/2
SRB 4
605
UE

FIG.6

## Description

[Technical Field]

The disclosure relates to a mobile communication system and, more specifically, to a method and an apparatus for quality-of-experience (QoE) measurement and radio measurement in a next generation mobile communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation

distributed computing technology for implementing services at levels of complexity exceeding the limit of UE operation capability by utilizing ultra-high-performance communication and computing resources

[Disclosure of Invention]

[Technical Problem]

Embodiments set forth herein are to provide an apparatus and a method capable of effectively providing services in a wireless communication system.

The technical subjects pursued in the disclosure may not be limited to the above-mentioned technical subjects, and other technical subjects which are not mentioned herein may be clearly understood from the following description by those skilled in the art to which the disclosure pertains.

[Solution to Problem]

Based on the discussion described above, the disclosure may provide a method performed by a terminal in a wireless communication system, the method including receiving configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration, and transmitting, to a first node associated with the SRB indicated by the first information, the QoE measurement report including the information on the start or the end of the measurement session related to the QoE measurement configuration, wherein the information on the start or the end of the measurement session related to the QoE measurement configuration is forwarded to a second node associated with the first node, based on dual connectivity (DC).

In addition, the disclosure may provide a method performed by a first node in a wireless communication system, the method including transmitting, to a terminal, configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration, and the first node being associated with the SRB indicated by the first information, and receiving, from the terminal, the QoE measurement report including the information on the start or the end of the measurement session related to the QoE measurement configuration, wherein the information on the start or the end of the measurement session related to the QoE measurement configuration is forwarded to a second node associated with the first node, based on dual connectivity (DC).

In addition, the disclosure may provide a terminal in a wireless communication system, the terminal including a transceiver and a controller connected to the transceiver, wherein the controller is configured to receive configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration, and transmit, to a first node associated with the SRB indicated by the first information, the QoE measurement report including the information on the start or the end of the measurement session related to the QoE measurement configuration, and wherein the information on the start or the end of the measurement session related to the QoE measurement configuration is forwarded to a second node associated with the first node, based on dual connectivity (DC).

In addition, the disclosure may provide a first node in a wireless communication system, the first node including a transceiver, and a controller connected to the transceiver, wherein the controller is configured to transmit, to a terminal, configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration, and the first node being associated with the SRB indicated by the first information, and receive, from the terminal, the QoE measurement report including the information on the start or the end of the measurement session related to the QoE measurement configuration, and wherein the information on the start or the end of the measurement session related to the QoE measurement configuration is forwarded to a second node associated with the first node, based on dual connectivity (DC).

[Advantageous Effects of Invention]

Embodiments set forth herein provide an apparatus and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a structure of a mobile communication system according to an embodiment of the disclosure.
FIG. 2 illustrates radio access state transition in a mobile communication system according to an embodiment of the disclosure.
FIG. 3 is a flowchart illustrating a procedure for configuring/reporting signaling-based QoE measurement according to an embodiment of the disclosure.
FIG. 4 is a flowchart illustrating a procedure for configuring/reporting management-based QoE measurement according to an embodiment of the disclosure.
FIG. 5 is a flowchart illustrating a procedure for configuring and reporting RAN visible QoE measurement according to an embodiment of the disclosure.
FIG. 6 illustrates an SRB path in an SA scenario according to an embodiment of the disclosure.
FIG. 7 illustrates an SRB path in a DC scenario according to an embodiment of the disclosure.
FIG. 8 is a block diagram illustrating an internal structure of a UE, applied to embodiments of the disclosure.
FIG. 9 is a block diagram illustrating a structure of a base station, applied to embodiments of the disclosure.

[Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which

includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure as described below. Moreover, based on determinations by those skilled in the art, the embodiments of the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) standards may be used for the sake of descriptive convenience. However, the disclosure is not limited by these terms and names, and may be applied in the same way to systems that conform other standards.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

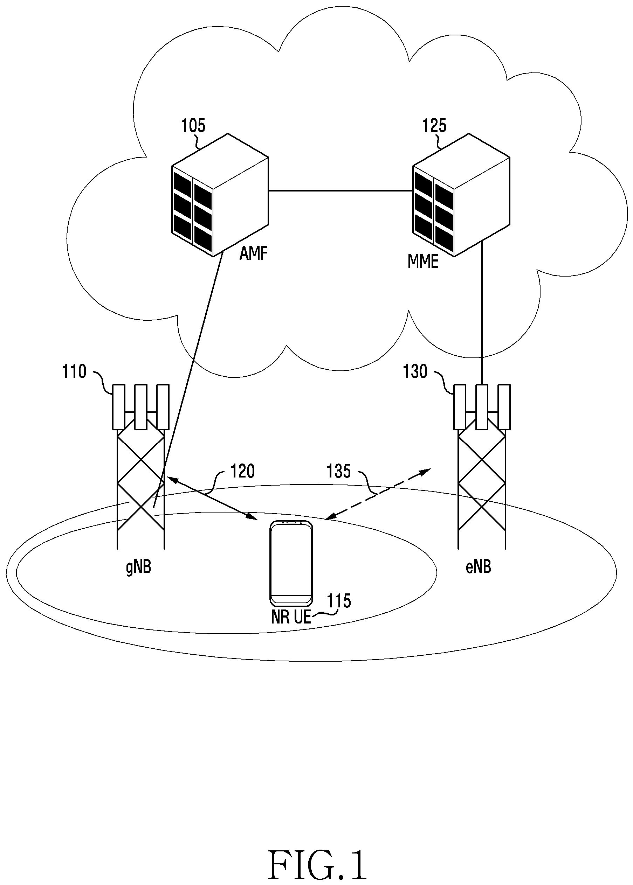

FIG. 1 illustrates a structure of a mobile communication system according to an embodiment of the disclosure.

Referring to FIG. 1, as illustrated therein, a radio access network of a mobile communication system (new radio, NR) according to an embodiment of the disclosure includes a base station (new radio Node B, hereinafter gNB) 110 and an AMF (new radio core network) 105. A user equipment (new radio user equipment, hereinafter NR UE or terminal) 115 accesses an external network via the gNB 110 and the AMF 105. The mobile communication system according to an embodiment of the disclosure may be a next generation wireless mobile communication system, and the gNB may be a next generation radio base station.

In FIG. 1, the gNB corresponds to an evolved node B (eNB) of a conventional LTE system. The gNB may be connected to the NR UE through a radio channel and provide outstanding services as compared to a conventional node B (120). Iin the next-generation mobile communication system according to an embodiment of the disclosure, since all user traffic is serviced through a shared channel, a device that collects state information, such as buffer statuses, available transmit power states, and channel states of UEs, and performs scheduling accordingly is required, and the gNB 110 serves as the device. In general, one gNB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE.

The AMF 105 performs functions such as mobility support, bearer configuration, and QoS configuration. The AMF is a device responsible for various control functions as well as a mobility management function for a UE, and is a connected to multiple base stations. In addition, the mobile communication system according to an embodiment of the disclosure may interwork with the conventional LTE system, and the AMF may be connected to a mobility management entity (MME) 125 via a network interface. The MME is connected to an eNB 130 that is an existing base station. A UE supporting LTE-NR dual connectivity may transmit/receive data while maintaining connections to both the gNB and the

eNB (135).

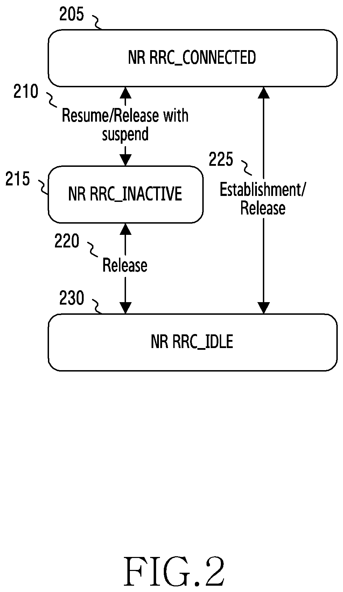

FIG. 2 illustrates radio access state transition in a mobile communication system according to an embodiment of the disclosure.

In the mobile communication system according to an embodiment of the disclosure, there are three types of radio access states (radio resource control (RRC) states). A connected mode (RRC_CONNECTED) 205 refers to a radio access state in which a UE is able to transmit/receive data. An idle mode (RRC_IDLE) 230 refers to a radio access state in which a UE monitors whether paging is transmitted to the UE. The two modes are radio access states that are also applied to the conventional LTE system, and the details thereof are the same as those of the conventional LTE system. The mobile communication system according to an embodiment of the disclosure may be a next-generation mobile communication system.

In the mobile communication system according to an embodiment of the disclosure, an inactive radio access state (RRC_INACTIVE) 215 is newly defined. In this radio access state, UE context is maintained in both the base station and the UE, and radio access network (RAN)-based paging is supported. The characteristics of the new radio access state may be enumerated as given below.

- Cell re-selection mobility;
- CN - NR RAN connection (both C/U-planes (control plane/user plane)) has been established for UE;
- The UE AS (Access Stratum) context is stored in at least one gNB and the UE;
- Paging is initiated by NR RAN;
- RAN-based notification area is managed by NR RAN;
- NR RAN knows the RAN-based notification area which the UE belongs to;

The UE in an inactive radio access state according to an embodiment of the disclosure may transition to a connected mode or a standby mode by using a specific procedure. The inactive mode transitions to the connected mode according to a resume procedure, and the connected mode transitions to the inactive mode by using a release procedure including suspend configuration information (210). This procedure is performed via one or more RRC messages transmitted and received between the UE and the base station, and includes one or more operations. Furthermore, the inactive mode may transition to the idle mode via the release procedure after the resume (220). The transition between the connected mode and the idle mode follows the conventional LTE technology. That is, the transition between the modes is performed via an establishment or release procedure.

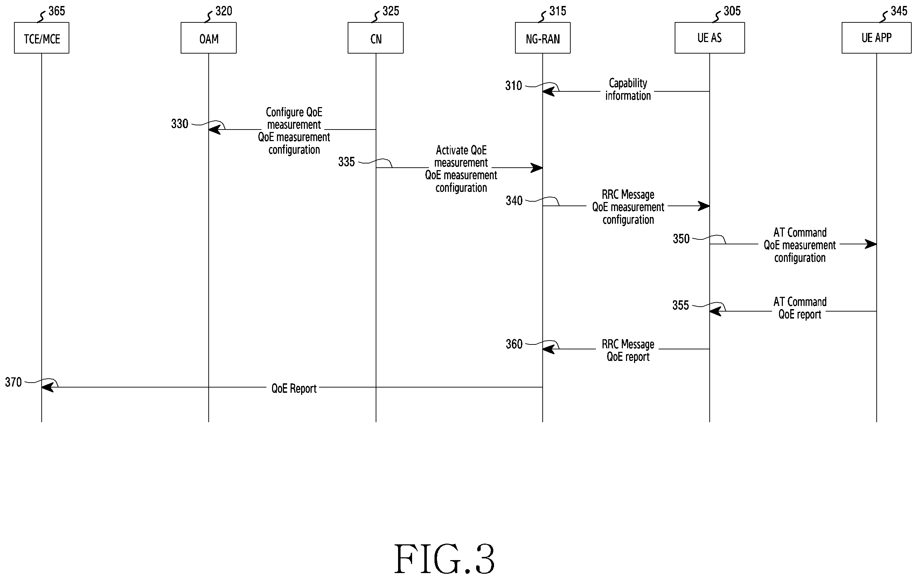

FIG. 3 is a flow diagram illustrating a procedure of configuring/reporting signaling-based quality of experience (QoE) measurement according to an embodiment of the disclosure.

Referring to FIG. 3, according to an embodiment of the disclosure, an access stratum (AS) 305 of a UE may transmit, to a base station (or NG-RAN 315) through a UE capability message (e.g., UECapabilityInformation), information (e.g., qoe-Streaming-MeasReport, qoe-MTSI-MeasReport, or qoe-VR-MeasReport) indicating whether quality of experience (QoE) measurement is supported for each service type (e.g., streaming, Multimedia Telephony Service for Internet Protocol (IP) Multimedia Subsystem (IMS) (MTSI), or virtual reality (VR)) (310). Before the UE transmits the UE capability message, the base station may transmit a message (e.g., DECapabilityEnquiry) for requesting the UE capability message to the UE. In addition, the UE may report, to the base station through the UE capability message, whether RAN-visible QoE measurement (e.g., ran-VisibleQoE-Streaming-MeasReport or ran-VisibleQoE-VR-MeasReport) is supported for each service type (e.g., streaming or VR). In addition, the UE may report, to the base station through the UE capability message, whether UL RRC segmentation of a QoE report message is supported (for example, ul-MeasurementReportAppLayer-Seg). The UE capability message includes Abstract Syntax Notation One (ASN.1) information as in Table 1 below, and a description of related parameters is given in Table 2 below.

【Table 1】

```
QoE-Parameters-r17 ::=                    SEQUENCE {
    qoe-Streaming-MeasReport-r17               ENUMERATED {supported}
OPTIONAL,
    qoe-MTSI-MeasReport-r17                    ENUMERATED {supported}
OPTIONAL,
    qoe-VR-MeasReport-r17                      ENUMERATED {supported}
OPTIONAL,
    ran-VisibleQoE-Streaming-MeasReport-r17    ENUMERATED {supported}
OPTIONAL,
    ran-VisibleQoE-VR-MeasReport-r17           ENUMERATED {supported}
OPTIONAL,
    ul-MeasurementReportAppLayer-Seg-r17       ENUMERATED {supported}
OPTIONAL,
```

```
    ...
}
```

[Table 2]

| 4.2.20 QoE measurement parameters | | | | |
|---|---|---|---|---|
| **Definitions for parameters** | **Per** | **M** | **FDD-TDD DIFF** | **FR1-FR2 DIFF** |
| ***goe-Streaming-MeasReport-r17***<br>Indicates whether the UE supports NR Q E Measurement Collection for streaming services, see TS 26.247 [29]. | UE | No | No | No |
| ***qoe-MTSI-MeasReport-r17***<br>Indicates whether the UE supports NR QoE Measurement Collection for MTSI services, see TS 26.114 [30]. | UE | No | No | No |
| ***qoe-VR-MeasReport-r17***<br>Indicates whether the UE supports NR QoE Measurement Collection for VR services, see TS 26.118 [31]. | UE | No | No | No |
| ***ran-VisibleQoE-Streaming-MeasReport-r17***<br>Indicates whether the UE supports RAN visible QoE Measurement Collection for streaming services. | UE | No | No | No |
| ***ran-VisibleQoE-VR-MeasReport-r17***<br>Indicates whether the UE supports RAN visible QoE Measurement Collection for VR services. | UE | No | No | No |
| ***ul-MeasurementReportAppLayer-Seg-r17***<br>Indicates whether the UE supports RRC segmentation of the MeasurementReportAppLayer message in UL, as specified in TS 38.331 [9]. | UE | No | No | No |

Service types that are supportable in LTE may include streaming and Multimedia Telephony Service for IP Multimedia Subsystem (IMS) (MTSI), and in the case of NR, in addition to the service types that are supportable in LTE, support for a virtual reality (VR) service has been defined in Rel-17, and services such as Multimedia Broadcast Multicast

Services (MBMS) and Extended Reality (XR) being additionally supportable may be defined in a subsequent release.

According to an embodiment of the disclosure, an operations administration and maintenance (OAM) 320 may provide a core network (CN) 325 with QoE measurement configuration information (330). The CN 325 having received the configuration information may transmit configuration information to the base station 315 to activate QoE measurement (335).

According to an embodiment of the disclosure, the base station 315 having received the configuration information from the CN 325 may transfer QoE configuration information to the AS 305 of the UE through an RRC message (e.g., RRCReconfiguration or RRCResume message) (340). The RRC message may include an IE (APPLayerMeasConfig) as in Table 3 below, and a description of related parameters is as shown in Table 4 below.

【Table 3】

*AppLayerMeasConfig*

The IE *AppLayerMeasConfig* indicates configuration of application layer measurements.

***AppLayerMeasConfig* information element**

```
AppLayerMeasConfig-r17 ::=                    SEQUENCE {
    measConfigAppLayerToAddModList-r17      SEQUENCE (SIZE
(1..maxNrofAppLayerMeas-r17)) OF MeasConfigAppLayer-r17         OPTIONAL,

    measConfigAppLayerToReleaseList-r17    SEQUENCE (SIZE
(1..maxNrofAppLayerMeas-r17)) OF MeasConfigAppLayerId-r17      OPTIONAL,

    rrc-SegAllowed-r17                              ENUMERATED {enabled}
OPTIONAL,
    ...
}
```

```
MeasConfigAppLayer-r17 ::=                SEQUENCE {
    measConfigAppLayerId-r17                  MeasConfigAppLayerId-r17,
    measConfigAppLayerContainer-r17          OCTET STRING (SIZE (1..8000))
OPTIONAL,
    serviceType-r17                           ENUMERATED {streaming, mtsi, vr,
spare5, spare4, spare3, spare2, spare1}      OPTIONAL,
    pauseReporting                            BOOLEAN
OPTIONAL,
    transmissionOfSessionStartStop           BOOLEAN
OPTIONAL,
    ran-VisibleParameters-r17                SetupRelease {RAN-VisibleParameters-
r17}                                          OPTIONAL,
    ...
}

RAN-VisibleParameters-r17 ::=             SEQUENCE {
    ran-VisiblePeriodicity-r17               ENUMERATED {ms120, ms240, ms480,
ms640, ms1024}                                  OPTIONAL,
    numberOfBufferLevelEntries-r17           INTEGER (1..8)
OPTIONAL,
    reportPlayoutDelayForMediaStartup-r17 BOOLEAN
OPTIONAL,
    ...
}
```

[Table 4]

| *AppLayerMeasConfig* **field descriptions** |
|---|
| ***measConfigAppLayerContainer***<br>The field contains configuration of application layer measurements, see Annex L (normative) in TS 26.247 [68], clause 16.5 in TS 26.114 [69] and TS 26.118 [70]. |
| ***pauseReporting***<br>The field indicates whether the transmission of *measReportAppLayerContainer* is paused or not. |
| ***ran-VisibleParameters***<br>The field indicates whether RAN visible application layer measurements shall be reported or not. The field is optionally present when *serviceType* is set to *streaming* or *vr*. Otherwise, it is absent. |
| ***rrc-SegAllowed***<br>This field indicates that RRC segmentation of *MeasurementReportAppLayer* is allowed. It may be present only if the UE supports RRC segmentation of the *MeasurementReportAppLayer* message in UL. |
| ***serviceType***<br>Indicates the type of application layer measurement. Value streaming indicates Quality of Experience Measurement Collection for streaming services (see TS 26.247 [68]), value mtsi indicates Quality of Experience Measurement Collection for MTSI (see TS 26.114 [69]). value vr indicates Quality of Experience Measurement Collection for VR service (see TS 26.118 [70]). The network always configures *serviceType* when application layer measurements are initially configured and at *fullConfig*. |
| ***transmissionOfSessionStartStop***<br>The field indicates whether the UE shall transmit indications when sessions in the application layer start and stop. The UE transmits a session start indication upon configuration of this field if a session already has started in the application layer. |

| *RAN-VisibleParameters* **field descriptions** |
|---|
| ***numberOfBufferLevelEntries***<br>The field contains the maximum number of buffer level entries that can be reported for RAN visible application layer measurements. |

| ***ran-VisiblePeriodicity*** The field indicates the periodicity of RAN visible reporting. Value ms120 indicates 120 ms, value ms240 indicates 240 ms and so on. |
|---|
| ***reportPlayoutDelayForMediaStartup*** The field indicates whether the UE shall report Playout Delay for Media Startup for RAN visible application layer measurements. |

In addition, according to an embodiment of the disclosure, the operation of the UE AS 305 having received the QoE configuration information from the base station through the RRC message may follow the description in Table 5 below.

[Table 5]

**5.3.5.13d Application layer measurement configuration**

The UE shall:

1> if *measConfigAppLayerToReleaseList* is included in *appLayerMeasConfig* within *RRCReconfiguration* or *RRCResume*:

2> for each *measConfigAppLayerId* value included in the *measConfigAppLayerToReleaseList*:

3> forward the *measConfigAppLayerId* and inform upper layers about the release of the application layer measurement configuration including any RAN visible application layer measurement configuration;

3> discard any application layer measurement report received from upper layers;

3> consider itself not to be configured to send application layer measurement report for the *measConfigAppLayerId.*

1> if *measConfigAppLayerToAddModList* is included in *appLayerMeasConfig* within *RRCReconfiguration* or *RRCResume:*

2> for each *measConfigAppLayerId* value included in the *measConfigAppLayerToAddModList:*

3> if *measConfigAppLayerContainer* is included for the corresponding *MeasConfigAppLayer* configuration:

4> forward the *measConfigAppLayerContainer,* the *measConfigAppLayerId* and the *serviceType* to upper layers considering the *serviceType;*

3> consider itself to be configured to send application layer measurement report for the *measConfigAppLayerId* in accordance with 5.7.16;

3> forward the *transmissionOfSessionStartStop,* if configured, and *measConfigAppLayerId* to upper layers considering the *serviceType;*

3> if *ran-VisibleParameters* is set to setup and the parameters have been received:

4> forward the *measConfigAppLayerId,* the *ran-VisiblePeriodicity,* if configured, the *numberOfBufferLevelEntries,* if configured, and the *reportPlayoutDelayForMediaStartup,* if configured, to upper layers considering the *service Type*;

3> else if *ran-VisibleParameters* is set to release:

4> forward the *measConfigAppLayerId* and inform upper layers about the release of the RAN visible application layer measurement configuration;

3> if *pauseReporting* is set to *true*:

4> if at least one segment, but not all segments, of a segmented *MeasurementReportAppLayer* message containing an application layer measurement report associated with the *measConfigAppLayerId* has been submitted to lower layers for transmission:

5> submit the remaining segments of the *MeasurementReportAppLayer* message to lower layers for transmission;

4> suspend submitting application layer measurement report containers to lower layers for the application layer measurement configuration associated with the *measConfigAppLayerId;*

(continued)

| **5.3.5.13d Application layer measurement configuration** |
|---|
| 4> store any previously or subsequently received application layer measurement report containers associated with the *measConfigAppLayerId* for which no segment, or full message, has been submitted to lower layers for transmission; |
| 3> else if *pauseReporting* is set to *false* and if transmission of application layer measurement report containers has previously been suspended for the application layer measurement configuration associated with the *measConfigAppLayerId:* |
| 4> submit stored application layer measurement report containers to lower layers, if any, for the application layer measurements configuration associated with the *measConfigAppLayerId;* |
| 4> resume submitting application layer measurement report containers to lower layers for the application layer measurement configuration associated with the *measConfigAppLayerId*; |
| NOTE 1: The UE may discard reports when the memory reserved for storing application layer measurement reports becomes full. |
| NOTE 2: The transmission of RAN visible application layer measurement reports is not paused when *pauseReporting* is set to *true.* |

As described above, in the case of a QoE measurement configuration included in measConfigAppLayerToAddModList, the AS layer 305 of the UE may transfer a part or all of configuration information to the upper layer or an application layer (UE APP) 345 of the UE through an AT command (350). In addition, the AS layer 305 of the UE may transmit, to the APP 345 of the UE, an AT command indicating/instructing the APP to delete configuration information stored with regard to a QoE measurement configuration included in measConfigAppLayerToAddReleaseList.

According to an embodiment of the disclosure, the APP 345 of the UE may perform QoE measurement according to the received configuration information. In addition, the UE APP 345 may report a result of the measurement according to the configuration information to the UE AS 305 through an AT command (355).

According to an embodiment of the disclosure, the UE AS 305 having received a measurement result report from the UE APP may report the measurement result to the base station 315 through an RRC message (e.g., a MeasurementReportAppLayer message) (360). Signaling radio bearer (SRB) 4 may be used for reporting QoE measurement results. The MeasurementReportAppLayer message may include ASN.1 information as in Table 6 below, and a description of related parameters is as shown in Table 7 below.

【Table 6】

| *MeasurementReportAppLayer* |
|---|
| The *MeasurementReportAppLayer* message is used for sending application layer measurement report. |
| Signalling radio bearer: SRB4 |
| RLC-SAP: AM |
| Logical channel: DCCH |
| Direction: UE to Network |

***MeasurementReportAppLayer message***

```
MeasurementReportAppLayer-r17 ::=        SEQUENCE {
    criticalExtensions                        CHOICE {
        measurementReportAppLayer-r17        MeasurementReportAppLayer-r17-IEs,
        criticalExtensionsFuture              SEQUENCE {}
    }
}

MeasurementReportAppLayer-r17-IEs ::=     SEQUENCE {
    measurementReportAppLayerList-r17           MeasurementReportAppLayerList-
r17,
    lateNonCriticalExtension                    OCTET STRING
OPTIONAL,
    nonCriticalExtension                        SEQUENCE{}
OPTIONAL
}

MeasurementReportAppLayerList-r17 ::= SEQUENCE (SIZE
(1..maxNrofAppLayerMeas-r17)) OF MeasReportAppLayer-r17

MeasReportAppLayer-r17 ::=              SEQUENCE {
    measConfigAppLayerId-r17                    MeasConfigAppLayerId-r17,
    measReportAppLayerContainer-r17           OCTET STRING
OPTIONAL,
    appLayerSessionStatus-r17                 ENUMERATED {started, stopped}
OPTIONAL,
    ran-VisibleMeasurements-r17               RAN-VisibleMeasurements-r17
OPTIONAL
}
```

```
RAN-VisibleMeasurements-r17 ::=           SEQUENCE {
      appLayerBufferLevelList-r17                SEQUENCE (SIZE (1..8)) OF
AppLayerBufferLevel-r17                                  OPTIONAL,
      playoutDelayForMediaStartup-r17           INTEGER (0..30000)
OPTIONAL,
      pdu-SessionIdList-r17                      SEQUENCE (SIZE (1..maxNrofPDU-
Sessions-r17)) OF PDU-SessionID                 OPTIONAL,
      ...
}

AppLayerBufferLevel-r17 ::= INTEGER (0..30000)
```

[Table 7]

| ***MeasurementReportAppLayer* field descriptions** |
|---|
| ***appLayerBufferLevelList***<br>The field indicates a list of application layer buffer levels, and each *AppLayerBufferLevel* indicates the application layer buffer level in ms. Value 0 corresponds to 0ms, value 1 corresponds to 10ms, value 2 corresponds to 20 ms and so on. If the buffer level is larger than the maximum value of 30000 (5 minutes), the UE reports 30000. |
| ***appLayerSessionStatus***<br>Indicates that an application layer measurement session in the application layer starts or ends. |
| ***playoutDelayForMediaStartup***<br>Indicates the application layer playout delay for media start-up in ms. Value 0 corresponds to 0ms, value 1 corresponds to 1ms, value 2 corresponds to 2 ms and so on. If the playout delay for media start-up is larger than the maximum value of 30000ms, the UE reports 30000. |
| ***measReportAppLayerContainer***<br>The field contains application layer measurement report, see Annex L (normative) in TS 26.247 [68], clause 16.5 in TS 26.114 [69] and TS 26.118 [70]. |
| ***pdu-SessionIdList*** |
| Contains the identity of the PDU session, or the identities of the PDU sessions, used for application data flows subject to the RAN visible application layer measurements. |

In addition, according to an embodiment of the disclosure, a specific procedure of the UE AS for reporting the measurement result may follow the operations described in Table 8 below.

[Table 8]

| **5.7.16 Application layer measurement reporting**<br>5.7.16.1 General<br>The purpose of this procedure is to send application layer measurement reports to the network.<br>5.7.16.2 Initiation |
|---|

(continued)

**5.7.16 Application layer measurement reporting**

A UE capable of application layer measurement reporting in RRC_CONNECTED may initiate the procedure when configured with application layer measurement, i.e. when *appLayerMeasConfig* and SRB4 have been configured by the network.

Upon initiating the procedure, the UE shall:

1> for each *measConfigAppLayerId:*

2> if the UE AS has received application layer measurement report from upper layers which has not been transmitted; and

2> if the application layer measurement reporting has not been suspended for the *measConfigAppLayerId* associated with the application layer measurement report according to clause 5.3.5.13d:

3> set the *measReportAppLayerContainer* in the *MeasurementReportAppLayer* message to the received value in the application layer measurement report;

2> set the *measConfigAppLayerId* in the *MeasurementReportAppLayer* message to the value of the *measConfigAppLayerId* received together with application layer measurement report information;

2> if session start or stop information has been received from upper layers for the *measConfigAppLayerId*:

3> set the *appLayerSessionStatus* to the received value of the application layer measurement information;

2> if RAN visible application layer measurement report has been received from upper layers:

3> for each *appLayerBufferLevel* value in the received RAN visible application layer measurement report:

4> set the *appLayerBufferLevel* values in the *appLayerBufferLevelList* to the buffer level values received from the upper layer in the order with the first *appLayerBufferLevel* value set to the newest received buffer level value, the second *appLayerBufferLevel* value set to the second newest received buffer level value, and so on until all the buffer level values received from the upper layer have been assigned or the maximum number of values have been set according to *appLayerBufferLevel,* if configured;

3> set the *playoutDelayForMediaStartup* to the received value in the RAN visible application layer measurement report, if any;

3> for each PDU session ID value indicated in the received RAN visible application layer measurement report, if any:

4> set the *PDU-SessionID* field in the *pdu-SessionIdList* to the indicated PDU session ID value;

2> if the encoded RRC message is larger than the maximum supported size of one PDCP SDU specified in TS 38.323 [5]:

3> if the RRC message segmentation is enabled based on the field *rrc-SegAllowed* received in *appLayerMeasConfig:*

4> initiate the UL message segment transfer procedure as specified in clause 5.7.7;

3> else:

4> discard the RRC message;

2> else:

3> submit the *MeasurementReportAppLayer* message to lower layers for transmission upon which the procedure ends.

According to an embodiment of the disclosure, the base station 315 may transfer the measurement result report received from the UE to a final server (trace collection entity (TCE) or measurement collection entity (MCE) 365) that collects measurement reports (370).

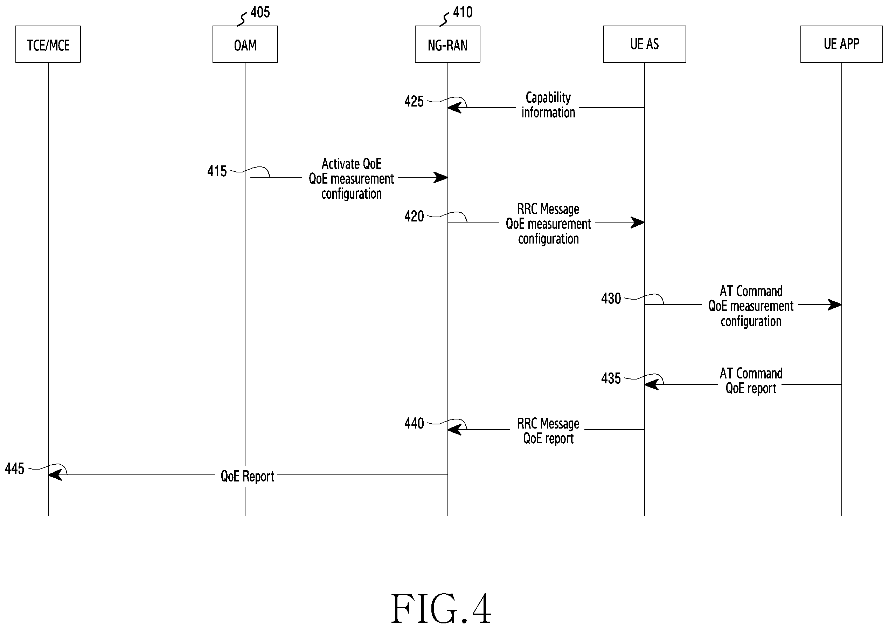

FIG. 4 is a flow diagram illustrating a procedure of configuring/reporting management-based QoE measurement according to an embodiment of the disclosure.

The operations performed in the management-based QoE configuration/reporting procedure will not be separately described if they are the same/similar to those performed in the signaling-based QoE configuration/reporting procedure described in FIG. 3, or if they are duplicate operations. Referring to FIG. 4, the management-based QoE configuration/reporting procedure will be described mainly in terms of differences from the signaling-based procedure.

According to an embodiment of the disclosure, in a method related to the management-based QoE configuration/reporting procedure, an OAM 405 may directly transmit a QoE measurement configuration to a base station 410 without passing through the CN, thereby indicating the base station to activate QoE measurement of a UE (415). The base station 410 having received the QoE measurement configuration may search for a single or multiple UEs that satisfy at

least one condition (e.g., at least one of an area scope, an application layer capability, or a service type). The base station 410 may transmit/transfer a QoE measurement configuration to one of the discovered single or multiple UEs through an RRC message (e.g., RRCReconfiguration message or RRCResume) (420). Each UE having received the RRC message may, as described above with reference to FIG. 3, transmit and receive a configuration for QoE measurement and a measurement result between an AS layer and an APP through an AT command between the AS layer and the APP. The AS layer of the UE reports, to the base station 410 through an RRC message, a measurement result acquired from the APP, and the base station 410 may transfer the measurement result to a TCE/MCE.

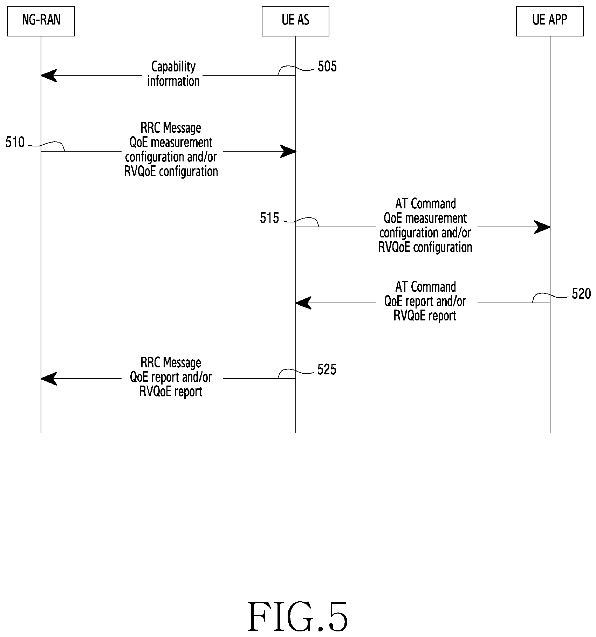

FIG. 5 is a flow diagram illustrating a procedure of configuring and reporting RAN-visible QoE measurement according to an embodiment of the disclosure.

According to an embodiment of the disclosure, when a method related to the signaling-based QoE configuration/reporting procedure and the management-based QoE configuration/reporting procedure, which are respectively described with reference to FIG. 3 and FIG. 4, is followed, QoE measurement is configured by an OAM, a QoE measurement report generated according to the configuration is collected by a TCE/MCE, and the QoE measurement report may be used by an operator for network optimization. Meanwhile, a base station is incapable of reading or understanding the OAM-based QoE measurement report transmitted by a UE. More specifically, in the MeasurmentReportAppLayer message, a measurement report generated by an application layer of the UE is included in a measurementReportAppLayerContainer, but is stored in an OCTET STRING format. Therefore, the base station or an RRC layer of the base station is unable to read or understand a measurement report generated by the application layer of the UE. In order to solve such a problem, that is, in order for the base station to read a QoE measurement report of the UE and use same for network optimization such as wireless resource management, RAN-visible QoE (RVQoE) measurement has been defined and introduced in 3GPP.

According to an embodiment of the disclosure, RVQoE measurement may be defined to be limited to a specific service type (e.g., streaming or VR). A UE may report, to a base station, whether RVQoE measurement is supported for each service type (e.g., streaming or VR) (505). In this case, a UECapabilityInformation message may be used. For example, the UE may include or configure a ran-VisibleQoE-Streaming-MeasReport parameter in the UECapabilityInformation message with regard to a streaming service and transmit the message to the base station. With regard to a VR service, the UE may include or configure a ran-VisibleQoE-VR-MeasReport parameter in the UECapabilityInformation message and transmit the message to the base station.

According to an embodiment of the disclosure, the base station may identify whether the UE supports RVQoE measurement for each service type, based on whether RVQoE measurement is supported for each service type (e.g., streaming or VR), which the UE has transmitted to the base station, and may generate an RVQoE measurement configuration, based on the identification and transmit same to the UE

(510). The RVQoE measurement configuration may be transferred together with an OAM-based QoE measurement configuration. The RVQoE measurement configuration may be included in an RRCReconfiguration or RRCResume message. The base station may indicate, to the UE, configuration or release of RVQoE measurement through configuration (setup) or release of a ran-VisibleParameters parameter within an AppLayerMeasConfig information element (IE). The ran-VisibleParameters parameter may include a RAN-VisibleParameters IE, and some or all of the following parameters may be provided from the base station to the UE through the IE.

- RVQoE measurement report period (ran-VisiblePeriodicity): A UE AS or UE APP may transmit an RVQoE measurement report according to the period.
- Maximum number of reportable buffer levels (numberOfBufferLevelEntries): When transmitting an RVQoE measurement report, the UE AS or UE APP may include multiple buffer levels, and the RVQoE measurement report may include a number of buffer levels less than or equal to a configuration value of the numberOfBufferLevelEntries.
- Whether to report playout delay at the time of media start (reportPlayoutDelayForMediaStartup): When a value of the reportPlayoutDelayForMediaStartup is indicated as true, the UE AS or UE APP may include a playout delay at the time of a media start in an RVQoE report and transmit the report. When the value of the reportPlayoutDelayForMediaStartup is indicated as false, the UE may not include the playout delay at the time of the media start in the RVQoE report.

According to an embodiment of the disclosure, the AS layer of the UE may transfer, to the APP layer of the UE, pieces of configuration information such as ran-VisiblePeriodicity described above (515). An RVQoE measurement configuration may be transferred to the APP layer together with an OAM-based QoE measurement configuration. The APP of the UE may perform QoE measurement, based on the RVQoE measurement configuration information to generate an RVQoE measurement report, and transmit same to the AS layer of the UE (520). The RVQoE measurement report may be transferred to the AS layer together with an OAM-based QoE measurement report.

The AS layer of the UE having received the RVQoE measurement report may transfer/transmit/report the transferred RVQoE measurement report to the base station (525). The RVQoE measurement report may be transferred/transmitted/reported to the base station together with an OAM-based QoE measurement report. The RVQoE measure-

ment report in operation 525 may be transmitted through a RAN-VisibleMeasurements IE in an MeasurementReportAppLayer message, and the IE may include all or some of the following parameters.

- Buffer level list of APP layer (appLayerBufferLevelList): The UE may include/report multiple buffer levels measured by the UE APP through this parameter. The number of included buffer levels may be limited by numberOfBufferLevelEntries in the RVQoE configuration.
- Playout delay (playoutDelayForMediaStartup): The UE may include/report a playout delay at the time of a media start through this parameter, and may indicate this value in ms. When reportPlayoutDelayForMediaStartup in the RVQoE configuration is configured as true, the UE may include this parameter in an RVQoE measurement report.
- PDU session ID list (pdu-SessionIdList): The UE may indicate, through this parameter, a protocol data unit (PDU) session(s) used for an application data flow which is subject to RVQoE measurement. After receiving the RVQoE measurement report from the UE, the base station may identify, through this parameter, a PDU session(s) for which the above RVQoE values (e.g., buffer level and playout delay) have been measured, and may optimize resource allocation and scheduling for the PDU session(s) indicated by this parameter, according to a result of the identification.

According to an embodiment of the disclosure, the base station may read the RVQoE report and use same to perform network optimization. For example, if it is determined, based on the RVQoE report, that a specific UE is experiencing degraded/poor QoE for a specific service, the base station may allocate a larger amount of wireless resources to the UE determined as experiencing degraded/poor QoE, thereby improving the QoE of the UE determined as experiencing degraded/poor QoE.

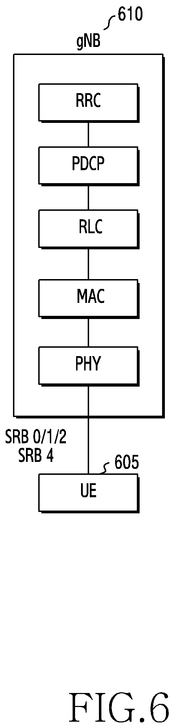

FIG. 6 is a diagram illustrating an SRB path in an SA scenario according to an embodiment of the disclosure.

Referring to FIG. 6, a UE may be connected to a network in a standalone (SA) state. That is, the UE 605 may communicate with one base station 610. In this case, a signaling radio bearer (SRB) may be defined/used/configured for transmission of an RRC message or a non-access stratum (NAS) message between the base station and the UE. More specifically, for example, in the SA state, SRB0, SRB1, SRB2, and SRB4 may be configured/used. SRB4 among SRB0, SRB1, SRB2, and SRB4 may be used for transmission of a QoE measurement report message (or an app layer measurement report message) of the UE.

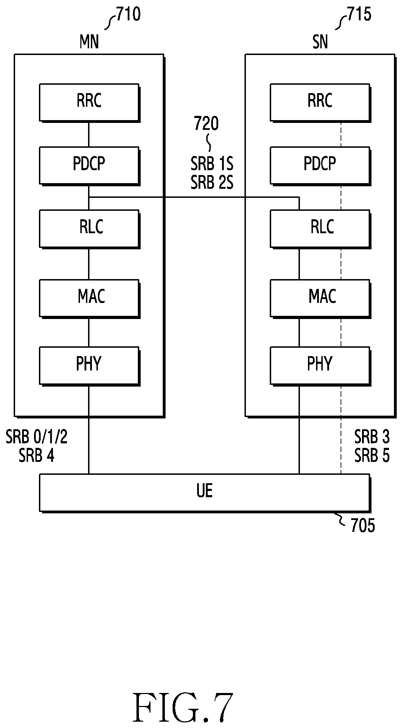

FIG. 7 is a diagram illustrating an SRB path in a DC scenario according to an embodiment of the disclosure.

Referring to FIG. 7, a UE may be connected to a network in a dual connectivity (DC) (e.g., NR-NR dual connectivity (NR-DC)) state. That is, the UE 705 may communicate with two base stations 710 and 715 at the same time, in a state in which the UE 705 has established a connection with each of the two base stations 710 and 715 individually. In dual connectivity (DC), the base stations may be referred to as a master node (MN) 710 and a secondary node (SN) 715, respectively. In this case, a signaling radio bearer (SRB) may be defined/used for transmission of an RRC message or a NAS message between the base station and the UE. More specifically, for example, SRB0, SRB1, SRB2, and SRB4 may be configured/used for communication between the UE and the MN. In addition, SRB4 among SRB0, SRB1, SRB2, and SRB4 may be used for transmission of a QoE measurement report message (or an app layer measurement report message) of the UE. In addition, SRB1 and SRB2 among SRB0, SRB1, SRB2, and SRB4 may be configured as split SRBs 720, and a split SRB may support communication between the UE and the MN through an RRC/packet data convergence protocol (PDCP) layer of the MN and a radio link control (RLC)/medium access control (MAC)/PHY layer of the SN. The base station may configure an SRB path for communication with the UE by using a split SRB. More specifically, for example, the base station may configure whether to use the RLC/MAC/PHY layer of the MN, the RLC/MAC/PHY layer of the SN, or both the RLC/MAC/PHY layer of the MN and the RLC/MAC/PHY layer of the SN. If both of the RLC/MAC/PHY layers of the MN and SN are used (duplication), transmission reliability may be improved through duplicate transmission of a packet. In addition, SRB3 and SRB5 among SRB0, SRB1, SRB2, and SRB4 may be configured/used for communication between the UE and the SN.

According to an embodiment of the disclosure, the UE may need an SRB configuration not only with the MN but also with the SN for transmission of a QoE measurement report message. The UE may use SRB4 to transmit a QoE measurement report message to the MN (RRC layer of the MN). Alternatively, the UE may define/use split SRB4 to transmit a QoE measurement report message to the MN (RRC layer of the MN). In this case, the QoE measurement report message may be transferred through the PHY/MAC/RLC layer of the SN to the PDCP/RRC layer of the MN. Alternatively, the UE may use SRB3 to transmit a QoE measurement report message to the SN (RRC layer of the SN). A QoE measurement report message may be a message having a lower priority than other uplink RRC messages (e.g., transmitted through SRB3). This may be because a QoE report may be used for network operation optimization but may not be an essential message for network operation. Therefore, for transmission of a QoE measurement report message to the SN (RRC layer of the SN), a new (separate/additional) SRB (e.g., SRB5 having a lower priority than SRB3) may be defined/used. SRB5 may be used for connection to the RRC layer of the SN through the PHY/MAC/RLC/PDCP layer of the SN, similar to SRB3.

In order for the UE to receive QoE configuration information from the MN (RRC layer of the MN), SRB1 (or split

SRB1) may be configured for the UE, and the UE may use the configured SRB1 (or split SRB1). In addition, in order for the UE to receive QoE configuration information from the SN (RRC layer of the SN), SRB3 may be configured for the UE, and the UE may use the configured SRB3. Alternatively, the UE may receive QoE configuration information in a form of an SN message (including SN QoE configuration information) included in a message transmitted in SRB1.

According to an embodiment of the disclosure, the UE in an NR-DC state may receive, from the network, an indication of a reporting leg required to be used for QoE measurement reporting. The reporting leg may be used, for example, to indicate, to the UE, whether the UE is to transmit a QoE measurement report to the MN, whether the UE is to transmit a QoE measurement report to the SN, whether the UE is to use SRB4 for QoE measurement reporting, or whether the UE is to use SRB5 for QoE measurement reporting. The UE may transmit a QoE measurement report to the base station by using the indicated reporting leg.

According to an embodiment of the disclosure, the UE in an NR-DC state may receive, from the network, an indication of a reporting leg required to be used for RAN-visible QoE (RVQoE) measurement reporting. The reporting leg may be used, for example, to indicate, to the UE, whether the UE is to transmit an RVQoE measurement report to the MN, whether the UE is to transmit an RVQoE measurement report to the SN, whether the UE is to use SRB4 for RVQoE measurement reporting, or whether the UE is to use SRB5 for RVQoE measurement reporting. A reporting leg related to RVQoE may be indicated separately from a reporting leg related to QoE other than RVQoE. Since a configuration and a report of QoE other than RVQoE are contained/included in a container within the RRC layer and thus are not visible, QoE other than RVQoE may hereinafter be referred to as encapsulated QoE for the sake of description convenience. That is, a reporting leg for measurement reporting for encapsulated QoE and a reporting leg for measurement reporting for RVQoE may be separately configured for the UE by the network. The network may configure/indicate the same value for each of a reporting leg for measurement reporting for encapsulated QoE and a reporting leg for measurement reporting for RVQoE. In addition, the network may configure/indicate a different value for each of a reporting leg for measurement reporting for encapsulated QoE and a reporting leg for measurement reporting for RVQoE. The UE may transmit an RVQoE measurement report to the base station by using the indicated reporting leg for RVQoE.

For the sake of description, various embodiments of the disclosure have been described under the assumption of NR-DC, but methods according to various embodiments of the disclosure may be applied even to various types of DC scenarios (e.g., multi-radio access technology (RAT)-DC (MR)) in the same way (after being modified into a proper form).

According to an embodiment of the disclosure, with regard to a QoE configuration for the UE, the MN or a master cell group (MCG) may transmit the QoE configuration to the UE through SRB1, and the SN or a secondary cell group (SCG) may transmit the QoE configuration to the UE through SRB3.

According to an embodiment of the disclosure, with regard to a QoE configuration for the UE, the MN or MCG may transfer the QoE configuration (e.g., in the form of an encapsulated message) to the SN or SCG, and the SN or SCG may configure the QoE configuration transferred from the MN or MCG for the UE through SRB3.

According to an embodiment of the disclosure, with regard to a QoE configuration for the UE, the SN or SCG may transfer the QoE configuration (e.g., in the form of an encapsulated message) to the MN or MCG, and the MN or MCG may configure the QoE configuration transferred from the SN or SCG for the UE through SRB1.

According to an embodiment of the disclosure, with regard to a QoE measurement report of the UE, the UE may transmit the QoE measurement report to the MN or MCG through SRB4, and may transmit the QoE measurement report to the SN or SCG through SRB5.

According to an embodiment of the disclosure, with regard to a QoE measurement report of the UE, the UE may transmit the QoE measurement report to the MN or MCG through SRB4, and the MN or MCG having received the QoE measurement report from the UE may transmit the QoE measurement report received from the UE to a TCE or MCE (via a CN).

According to an embodiment of the disclosure, with regard to a QoE measurement report of the UE, the UE may transmit the QoE measurement report to the MN or MCG through SRB4, and the MN or MCG having received the QoE measurement report from the UE may transmit the QoE measurement report received from the UE to the SN or SCG (e.g., in the form of an encapsulated message). The SN or SCG having received the QoE measurement report of the UE from the MN or MCG may transmit the QoE measurement report of the UE to the TCE or MCE (via the CN).

According to an embodiment of the disclosure, the UE may transmit a QoE measurement report to the SN or SCG through SRB5, and the SN or SCG having received the QoE measurement report from the UE may transmit the QoE measurement report of the UE to the TCE or MCE (via the CN).

According to an embodiment of the disclosure, the UE may transmit a QoE measurement report to the SN or SCG through SRB5, and the SN or SCG having received the QoE measurement report from the UE may transmit the QoE measurement report of the UE to the MN or MCG (e.g., in the form of an encapsulated message). The MN or MCG having received the QoE measurement report of the UE from the SN or SCG may transmit the QoE measurement report of the UE to the TCE or MCE (via the CN).

According to an embodiment of the disclosure, when performing QoE configuration, the base station may indicate, to the UE, whether the UE is allowed (permitted) to use RRC segmentation when performing QoE measurement

reporting. According to an embodiment of the disclosure, the base station may indicate, to the UE (e.g., through indicator 1), whether the UE is allowed (permitted) to use RRC segmentation when performing QoE measurement reporting (transmitted to the MN) through SRB4. In addition to the configuration of indicator 1, the base station may indicate, (e.g., through indicator 2), whether the UE is allowed (permitted) to use RRC segmentation when performing QoE measurement reporting (transmitted to the SN) through SRB5. Indicator 1 and indicator 2 are merely arbitrary names for the sake of description, and are not to be interpreted as limiting the meaning of a technical spirit according to an embodiment of the disclosure. In addition, terms referred to hereinafter as indicator A or the like are also merely arbitrary names, and are not to be interpreted as limiting the meaning of the technical spirit according to an embodiment of the disclosure. The UE may use RRC segmentation for QoE measurement reporting through SRB4 when some or all (i.e., at least one) of the following conditions are satisfied. That is, by using RRC segmentation, the UE may segment a QoE measurement report message into multiple RRC messages and transmit the messages to the MN.

(Condition 1) When the UE has received a QoE configuration including indicator 1 or configured as true
(Condition 2) When the UE supports the (uplink) RRC segmentation function for QoE measurement reporting
(Condition 3) When an RRC message (encoded RRC message) generated by the UE to transmit a QoE measurement report through SRB4 is larger than a maximally supportable PDCU SDU size

As an embodiment of the disclosure, if the UE does not satisfy at least one of the above condition 1 and condition 2 but satisfies condition 3, the UE may discard the generated RRC message. This may mean loss of the QoE measurement report.

The UE may use RRC segmentation for QoE measurement reporting through SRB5 when some or all (i.e., at least one) of the following conditions are satisfied. That is, by using RRC segmentation, the UE may segment a QoE measurement report message into multiple RRC messages and transmit the messages to the SN.

(Condition 1) When the UE has received a QoE configuration including indicator 2 or configured as true
(Condition 2) When the UE supports the (uplink) RRC segmentation function for QoE measurement reporting
(Condition 3) When an RRC message (encoded RRC message) generated by the UE to transmit a QoE measurement report through SRB5 is larger than a maximally supportable PDCU SDU size

As an embodiment of the disclosure, if the UE does not satisfy at least one of the above condition 1 and condition 2 but satisfies condition 3, the UE may discard the generated RRC message. This may mean loss of the QoE measurement report.

According to an embodiment of the disclosure, since indicator 1 relates to whether RRC segmentation is allowed for a QoE measurement report received by the MN (transmitted by the UE), the MN may determine whether to configure indicator 1 (whether indicator 1 is included or not included in a QoE configuration) or a configuration value (true or false). Since indicator 2 relates to whether RRC segmentation is allowed for a QoE measurement report received by the SN (transmitted by the UE), the SN may determine whether to configure indicator 2 (whether indicator 2 is included or not included in a QoE configuration) or a configuration value (true or false). According to an embodiment of the disclosure, a single node (MN or SN) may transmit a QoE configuration to the UE. For example, when the MN provides/transmits/transfers a QoE configuration to the UE, the MN may configure both indicator 1 and indicator 2 for the UE. Meanwhile, the MN may provide both indicator 1 and indicator 2 to the UE when performing QoE configuration, but may not be able to determine whether to configure indicator 2 (i.e., whether indicator 2 is included or not included in a QoE configuration) or a configuration value (true or false). This is because the MN may not know whether the SN supports or allows RRC segmentation. Methods according to various embodiments of the disclosure may solve such as problem. On the contrary, when the SN provides/transmits/transfers a QoE configuration to the UE, the SN may configure both indicator 1 and indicator 2 for the UE. Meanwhile, the SN may provide both indicator 1 and indicator 2 to the UE when performing QoE configuration, but may not be able to determine whether to configure indicator 1 (whether indicator 1 is included or not included in a QoE configuration) or a configuration value (true or false). This is because the SN may not know whether the MN supports or allows RRC segmentation. Methods according to various embodiments of the disclosure may solve such as problem.

In addition, when the MN determines/configures a reporting leg (e.g., whether the UE is to use SRB4 for QoE measurement reporting or whether the UE is to use SRB5 for QoE measurement reporting), the MN may need whether the SN supports or allows RRC segmentation for SRB5 (e.g., indicator 2), (the MN may need to identify same). The reason for which the MN needs to identify whether the SN supports or allows RRC segmentation for SRB5 from the MN's perspective is that, if the SN does not support or allow RRC segmentation for SRB5, but the MN supports or allows RRC segmentation for SRB4, the MN may determine/configure a reporting leg to be SRB4 in consideration of the non-support/non-allowance of RRC segmentation for SRB5 by the SN and the support/allowance of RRC segmentation for SRB4 by the MN, in order to prevent the loss of a large-sized QoE measurement report. In addition, if the SN supports or allows RRC segmentation for

SRB5, and the MN does not support or allow RRC segmentation for SRB4, the MN may determine/configure a reporting leg to be SRB5 in order to prevent the loss of a large-sized QoE measurement report. For the same reason, for example, when the SN determines/configures a reporting leg (e.g., SRB4 or SRB5), the MN may need whether the MN supports or allows RRC segmentation for SRB4 (e.g., indicator 1), (the MN may need to identify same).

In order to resolve the above-described situations in which the MN is unaware of whether or not the SN supports or allows RRC segmentation, the SN is unaware of whether or not the MN supports or allows RRC segmentation, the MN needs to identify whether or not the SN supports or allows RRC segmentation for SRB5, and the SN needs to identify whether or not the MN supports or allows RRC segmentation for SRB5, according to an embodiment of the disclosure, RRC segmentation information of each of the MN and the SN may be exchanged therebetween.

According to an embodiment of the disclosure, node 1 (e.g., the MN or SN that indicates a QoE configuration to the UE) may request node 2 (e.g., a different node or the SN or MN) to transmit information relating to whether node 2 supports or allows RRC segmentation (e.g., during initial QoE configuration for the UE). One indicator (e.g., indicator A) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 1 requests node 2 to transmit the information relating to whether node 2 supports or allows RRC segmentation, and indicator A may also be defined in various messages other than those described above. Node 1 may request transmission of the information relating to whether node 2 supports or allows RRC segmentation by including the indicator A in the message or configuring same as true. In addition, node 1 may not request transmission of the information relating to whether node 2 supports or allows RRC segmentation by not including the indicator A in the message or configuring same as false.

According to an embodiment of the disclosure, when node 2 (e.g., the SN or MN) receives a request for transmission of information relating to whether RRC segmentation is supported or allowed from node 1 (e.g., the MN or SN) (e.g., when node 2 receives a message including the indicator A or including same configured as true), node 2 (SN or MN) may transmit the information relating to whether node 2 supports or allows RRC segmentation to node 1 (MN or SN). One indicator (e.g., indicator B) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 2 transmits, to node 1, the information relating to whether node 2 supports or allows RRC segmentation, and indicator B may also be defined in various messages other than those described above. Node 2 may indicate/transmit information indicating that node 2 supports or allows RRC segmentation by including the indicator B in the message or configuring same as true. Thereafter, node 1 or node 2 may indicate the allowance of RRC segmentation for node 2 to the UE. In addition, node 2 may indicate/transmit information indicating that node 2 does not support or allow RRC segmentation by not including the indicator B in the message or configuring same as false. Thereafter, node 1 or node 2 may indicate the non-allowance of RRC segmentation for node 2 to the UE.

Node 1 receives information on the indicator B from node 2, whereby node 1 may configure, for the UE, an indicator indicating whether RRC segmentation is allowed for node 2, and may determine/configure a reporting leg (SRB4 or SRB5) by considering same.

According to an embodiment of the disclosure, node 1 (e.g., the MN or SN that indicates a QoE configuration to the UE) may request node 2 (e.g., a different node or the SN or MN) to request node 2 to allow RRC segmentation (e.g., during initial QoE configuration for the UE). One indicator (e.g., indicator C) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 1 requests node 2 to allow RRC segmentation, and indicator C may also be defined in various messages other than those described above. Node 1 may request node 2 to allow RRC segmentation by including the indicator C in the message or configuring same as true. In addition, node 1 may not request node 2 to allow RRC segmentation by not including the indicator C in the message or configuring same as false.

According to an embodiment of the disclosure, when node 2 (e.g., the SN or MN) receives a request for allowance of RRC segmentation from node 1 (e.g., the MN or SN) (e.g., when node 2 receives a message including the indicator C or including same configured as true), node 2 (SN or MN) may indicate, to node 1 (MN or SN), acceptance or rejection of the request for allowance of RRC segmentation for node 2. One indicator (e.g., indicator D) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 2 indicates, to node 1, acceptance or rejection of the request for allowance of RRC segmentation for node 2, and indicator D may also be defined in various messages other than those described above. Node 2 may indicate acceptance of the request for allowance of RRC segmentation from node 1 by including the indicator D in the message or configuring same as true. Thereafter, node 1 or node 2 may indicate the allowance of RRC segmentation for node 2 to the UE. In addition, node 2 may indicate rejection of the request for allowance of RRC segmentation from node 1 by not including the indicator D in the message or configuring same as false. Thereafter, node 1

or node 2 may indicate the non-allowance of RRC segmentation for node 2 to the UE.

Node 1 receives information on the indicator D, whereby node 1 may configure, for the UE, an indicator indicating whether RRC segmentation is allowed for node 2 and, in addition, may determine/configure a reporting leg (SRB4 or SRB5) by considering the indicator indicating whether segmentation is allowed for node 2.

According to an embodiment of the disclosure, node 2 (e.g., the SN or MN that requests node 1 to change a QoE configuration) may request node 1 (e.g., a different node or the MN or SN indicating a QoE configuration to the UE) to change an RRC segmentation allowance indicator of node 2 (e.g., when requesting node 1 to change a QoE configuration). For example, node 2 may allow RRC segmentation during initial QoE configuration, but may not allow RRC segmentation in a particular case (e.g., when a large amount of computing resources and energy resources are consumed due to RRC segmentation operation). Alternatively, node 2 may not allow RRC segmentation during initial QoE configuration, but may allow RRC segmentation in a particular case (e.g., when a problem such as a lack of wireless resources is resolved). One indicator (e.g., indicator E) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 2 requests node 1 to change the RRC segmentation allowance indicator of node 2, and indicator E may also be defined in various messages other than those described above. Node 2 may request a change in whether RRC segmentation is allowed for node 2 by including the indicator E in the message or configuring same as true. In addition, node 2 may not request a change in whether RRC segmentation is allowed for node 2 by not including the indicator E in the message or configuring same as false.

According to an embodiment of the disclosure, when node 1 (e.g., the MN or SN) receives a request to change whether RRC segmentation is allowed from node 2 (e.g., the SN or MN) (e.g., when node 1 receives a message including the indicator E or including same configured as true), node 1 (the MN or SN) may indicate, to node 2 (the SN or MN), acceptance or rejection of the request to change whether RRC segmentation is allowed for node 2. One indicator (e.g., indicator F) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 1 indicates, to node 2, acceptance or rejection of the request to change whether RRC segmentation is allowed for node 2, and indicator F may also be defined in various messages other than those described above. Node 1 may indicate acceptance of the request to change whether RRC segmentation is allowed from node 2 by including the indicator F in the message or configuring same as true. Thereafter, node 1 or node 2 may change whether RRC segmentation is allowed for node 2 and indicate a result of the change to the UE. In addition, node 1 may indicate rejection of the request to change whether RRC segmentation is allowed from node 2 by not including the indicator F in the message or configuring same as false. Thereafter, node 1 or node 2 may maintain a configuration of the UE relating to whether RRC segmentation is allowed for node 2 without changing same.

Information on the indicator F is received, whereby node 1 may configure (change or maintain), for the UE, an indicator indicating whether RRC segmentation is allowed for node 2, and may determine/configure a reporting leg (SRB4 or SRB5) by considering same.

According to an embodiment of the disclosure, node 1 (e.g., the MN or SN) may provide a QoE configuration to the UE. For the QoE configuration, a reporting leg configured for the UE may indicate node 2 (e.g., the SN or the MN). According to information (node 2) indicated by the reporting leg, the UE may transmit a QoE measurement report to node 2. Node 2 may transfer the received QoE measurement report to node 1. Node 1 having received the QoE measurement report from node 2 may transfer same to a TCE/MCE. Meanwhile, node 2 may experience RAN overload, and due to the RAN overload, node 2 may temporarily suspend the QoE measurement reporting by the UE. Node 2 may temporarily suspend the QoE measurement reporting of the UE by including a pause indicator (e.g., pauseReporting) for the UE or indicating same as true. However, the QoE configuration used for the QoE measurement reporting by the UE is information configured for the UE by node 1 rather than node 2. Therefore, if node 2 having not indicated the QoE configuration to the UE temporarily suspends the measurement reporting by the UE according to the QoE configuration independently without consultation with node 1, node 1 may determine (e.g., make an incorrect determination) that a problem has occurred in QoE transmission of the UE for the QoE measurement reporting, and may change a relevant network configuration (e.g., release the corresponding QoE configuration for the UE and performs QoE configuration for another UE) (e.g., perform an incorrect configuration change).

In order to solve a problem that may occur when node 1 indicates a QoE configuration used for QoE measurement reporting by the UE, and node 2 having not indicated the QoE configuration to the UE independently indicates a temporary suspension related to the QoE configuration to the UE without consultation with node 1, the base station (node 1 or node 2) may negotiate information on an indicator configuration for pausing/resuming (e.g., before providing, to the UE, an indicator for pausing (temporary suspension of QoE measurement reporting) and resuming (resumption of the temporarily suspended QoE measurement reporting)). The negotiation of the information on the indicator configuration performed between node 1 and node 2 may be performed for information on a QoE ID for which

pausing/resuming may be requested and/or a QoE ID for which pausing/resuming is required not to be requested.

According to an embodiment of the disclosure, when RAN overload is detected, node 2 (e.g., the MN or SN) may request node 1 (the SN or MN) to indicate pausing of measurement reporting by the UE (for each QoE ID) (or transmit a preference for pausing). One indicator (e.g., indicator G) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 2 requests node 1 to indicate pausing of measurement reporting by the UE, and indicator G may also be defined in various messages other than those described above. Node 2 may indicate, using the indicator G, one or multiple QoE IDs for which an indication to pause measurement reporting by the UE is requested, or may include one indicator (e.g., indicator K) or configure same as true for each QoE configuration ID for which a pause indication is requested.

According to an embodiment of the disclosure, node 1 (e.g., having received a request for a pause indication) may indicate whether to accept or reject the request for a pause indication to node 2 (for each indicated QoE ID). One indicator (e.g., indicator H) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 1 indicates whether to accept the request for a pause indication to node 2, and indicator H may also be defined in various messages other than those described above. Node 1 may indicate, using the indicator H, one or multiple QoE IDs for the request for a pause indication is accepted (or rejected), or may indicate acceptance or rejection for each QoE ID for which the request for a pause indication is received. Thereafter, with respect to a QoE ID for the request for a pause indication is accepted, node 1 or node 2 may indicate pausing to the UE for each QoE ID (e.g., by configuring a pauseReporting indicator as true).

According to an embodiment of the disclosure, when RAN overload is released, node 2 (e.g., the MN or SN) may request node 1 (e.g., the SN or MN) to indicate resuming of measurement reporting by the UE (for each QoE ID) (or transmit a preference for resuming) (in order to resume the paused QoE measurement reporting by the UE). One indicator (e.g., indicator I) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 2 requests node 1 to indicate resuming of measurement reporting by the UE, and indicator I may also be defined in various messages other than those described above. Node 2 may indicate, using the indicator I, one or multiple QoE IDs for which a resume indication is requested, or may omit one indicator (e.g., identical to the indicator K) or configure same as false for each QoE configuration ID for which the resume indication is requested.

According to an embodiment of the disclosure, node 1 (e.g., having received a request for a resume indication) may indicate whether to accept or reject the request for a resume indication to node 2 (for each indicated QoE ID). One indicator (e.g., indicator J) may be defined in an S-NODE ADDITION REQUEST, S-NODE MODIFICATION REQUEST, S-NODE MODIFICATION REQUIRED, S-NODE ADDITION REQUEST ACKNOWLEDGE, S-NODE MODIFICATION REQUEST ACKNOWLEDGE, and/or S-NODE MODIFICATION CONFIRM message, so that node 1 indicates whether to accept the request for a resume indication to node 2, and indicator J may also be defined in various messages other than those described above. Node 1 may indicate, using the indicator J, one or multiple QoE IDs for the request for a resume indication is accepted (or rejected), or may indicate acceptance or rejection for each QoE ID for which the resume request is received. Thereafter, with respect to a QoE ID for the request for a resume indication is accepted, node 1 or node 2 may indicate resuming to the UE for each QoE ID (e.g., by configuring the pauseReporting indicator as false).

According to an embodiment of the disclosure, for example, at the time of initial QoE configuration or change, node 1 (e.g., the MN or SN) may indicate, to node 2 (e.g., the SN or MN), one or multiple QoE IDs for which pausing (and/or resuming) is required not to be indicated to the UE. Node 2 having received an indication of the one or multiple QoE IDs for which pausing (and/or resuming) is required not to be indicated to the UE may not indicate pausing (or resuming) to the UE with regard to the indicated QoE IDs, or may not transmit a request for a pause indication to node 1. Node 2 may indicate pausing (or resuming) to the UE with regard to QoE IDs having not been indicated, or may transmit the request for a pause indication to node 1. To this end, the negotiation between node 1 and node 2 for indicating pausing (or resuming) to the UE in the above-described embodiment may be performed.

According to an embodiment of the disclosure, for example, at the time of initial QoE configuration or a change in a QoE configuration, node 1 (e.g., the MN or SN) may indicate, to node 2 (e.g., the SN or MN), one or multiple QoE IDs for which pausing (and/or resuming) may be indicated to the UE. Node 2 having received an indication of the one or multiple QoE IDs for which pausing (and/or resuming) may be indicated to the UE may not indicate pausing (or resuming) to the UE with regard to QoE IDs having not been indicated, or may not transmit a request for a pause indication to node 1. Node 2 may indicate pausing (or resuming) to the UE with regard to the indicated QoE IDs, or may transmit the request for a pause indication to node 1. To this end, the negotiation between node 1 and node 2 for indicating pausing (or resuming) to the UE in the above-described embodiment may be performed.

According to an embodiment of the disclosure, when a QoE measurement session starts or ends (for each configured QoE ID), the UE may configure a configuration value of QoE session status information (e.g., appLayerSes-

sionStatus) as "start" or "stop" and transmit same to the base station. The base station having received the QoE session status information from the UE may determine, for the UE, whether a QoE measurement session corresponding to a QoE ID has been started and is in progress or has been ended. The QoE session status information may be information that may be usefully used by the base station in managing QoE measurement reporting by the UE. For example, if a QoE measurement session of the UE is in progress, the base station may select the UE having the QoE measurement session in progress as a UE for minimization of drive tests (MDT) measurement and may provide an MDT configuration. By receiving the MDT configuration, the UE having the QoE measurement session in progress may perform a QoE measurement and an MDT measurement simultaneously, and transmit two types of (QoE and MDT) measurement reports to an OAM, TCE, or MCE, so that the OAM, TCE, or MCE may collect/combine/associate the two pieces of information to interpret results, and ultimately perform an operation related to network optimization. The operation in which the OAM, TCE, or MCE collects/combines/associates the two pieces of information such as QoS and MDT to interpret results, and ultimately performs an operation related to network optimization may be referred to as alignment of QoE and MDT measurements.

When a configured QoE measurement session is started, a dual connectivity (DC) UE may transmit session status information to node 1 (MN or SN) indicated as a reporting leg (e.g., after configuring same as "start"). Therefore, node 1 may provide an MDT configuration to the UE (e.g., for alignment of QoE and MDT measurements). Meanwhile, node 2 (SN or MN) is unable to know whether the QoE measurement session of the UE has started, and may not be able to provide an MDT configuration to the UE (e.g., for alignment of QoE and MDT measurements). According to an embodiment of the disclosure, in order to solve a problem in which node 2 (SN or MN) is unable to know whether the QoE measurement session of the UE has started, and may not be able to provide an MDT configuration to the UE (e.g., for alignment of QoE and MDT measurements), when session status information is received from a UE APP, a UE AS may transmit the session status information not only to node 1 indicated as a reporting leg, but also to node 2. If a reporting leg (SRB) corresponding to the transmission of the session status information is not configured, the UE may store the session status information and transmit same when the corresponding SRB is configured.

In addition, according to an embodiment of the disclosure, if the UE AS receives session status information from the UE APP, the UE AS may transmit the session status information to node 1 (MN or SN) indicated as a reporting leg, and node 1 that has received same may transfer the session status information to node 2 (SN or MN) (e.g., through Xn interface signaling).

According to an embodiment of the disclosure, when a UE (in a DC state) is unable to use an SRB (SRB4 or SRB5) (indicated as a reporting leg) for QoE measurement reporting (e.g., when the corresponding SRB is not configured or in a case of an MCG or SCG failure), the UE may store a QoE measurement report corresponding to the unavailable SRB (SRB4 or SRB5). In this case, a memory for storing the QoE measurement report corresponding to an unavailable SRB (SRB4 or SRB5) by the UE may be separately defined/configured/constructed. The memory for storing the QoE measurement report may be a separate memory (e.g., memory A) different from 1) a memory for a paused QoE measurement report and 2) a memory for storing an inactive/idle mode or MBS QoE measurement report. A requirement for the size of memory A for storing a QoE measurement report, which needs to be minimally supported by the UE supporting 1) QoE measurement/configuration/reporting for at least one service type, 2) QoE measurement/configuration/reporting in (NR-)DC, and/or 3) SRB5, may be defined in the standard. More specifically, for example, the UE supporting 1) QoE measurement/configuration/reporting for at least one service type, 2) QoE measurement/configuration/reporting in (NR-)DC, and/or 3) SRB5 may be defined in the standard to be required to support the new memory A of a minimum size (e.g., 64 KB). According to an embodiment of the disclosure, when a UE (in a DC state) is unable to use an SRB (SRB4 or SRB5) (indicated as a reporting leg) for QoE measurement reporting (e.g., when the corresponding SRB is not configured or in a case of an MCG or SCG failure), the UE may store a QoE measurement report (e.g., report 1) corresponding to the unavailable SRB and a paused QoE measurement report (e.g., report 2) in the same memory. According to an embodiment of the disclosure, a requirement for a memory size (e.g., 64 KB) which the UE needs to minimally support for the common memory for storing the two types of QoE measurement reports (reports 1/2), that is, a QoE measurement report corresponding to an unavailable SRB and a paused QoE measurement report may be defined in the standard.

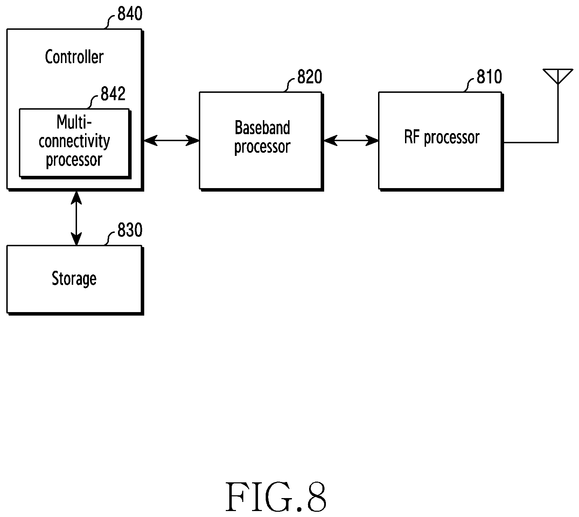

FIG. 8 is a block diagram illustrating an internal structure of a UE, applied to embodiments of the disclosure.

Referring to FIG. 8, the UE may include a radio frequency (RF) processor 810, a baseband processor 820, a storage 830, and a controller 840.

The RF processor 810 may perform functions for transmitting/receiving signals through a radio channel, such as signal band conversion and amplification. That is, the RF processor 810 may up-convert a baseband signal provided from the baseband processor 820 to an RF band signal, may transmit the same through an antenna, and may down-convert an RF band signal received through the antenna to a baseband signal. For example, the RF processor 810 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 810 may include multiple RF chains. Furthermore, the RF processor 810 may

perform beamforming. For the beamforming, the RF processor 810 may adjust the phase and magnitude of signals transmitted/received through multiple antennas or antenna elements, respectively. In addition, the RF processor may perform MIMO, and may receive multiple layers when performing an MIMO operation.

The baseband processor 820 may perform functions of conversion between baseband signals and bitstrings according to the system's physical layer specifications. For example, during data transmission, the baseband processor 820 may encode and modulate a transmitted bitstring to generate complex symbols. In addition, during data reception, the baseband processor 820 may demodulate and decode a baseband signal provided from the RF processor 810 to restore a received bitstring. For example, when following the orthogonal frequency division multiplexing (OFDM) scheme, during data transmission, the baseband processor 820 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 820 may split a baseband signal provided from the RF processor 810 at the OFDM symbol level, may restore signals mapped to subcarriers through a fast Fourier transform (FFT) operation, and may restore a received bitstring through demodulation and decoding.

The baseband processor 820 and the RF processor 810 transmit and receive signals as described above. Therefore, the baseband processor 820 and the RF processor 810 may be referred to as a transmitter, a receiver, a transceiver, or a communication unit. Furthermore, at least one of the baseband processor 820 and the RF processor 810 may include multiple communication modules to support multiple different radio access technologies. In addition, at least one of the baseband processor 820 and the RF processor 810 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 830 stores basic programs, application programs, and data, such as configuration information, for operation of the main base station. Particularly, the storage 830 may store information related to a second access node configured to perform wireless communication by using a radio access technology. In addition, the storage 830 provides the stored data at the request of the controller 840.

The controller 840 controls the overall operation of the UE. For example, the controller 840 transmits/receives signals through the baseband processor 820 and the RF processor 810. In addition, the controller 840 records data in the storage 830 and reads the data from the storage 830. To this end, the controller 840 may include at least one processor. For example, the controller 840 may include a communication processor (CP) that performs control for communication and an application processor (AP) that controls upper layers such as application programs, and may include a multi-connectivity processor 842 as illustrated in the drawing.

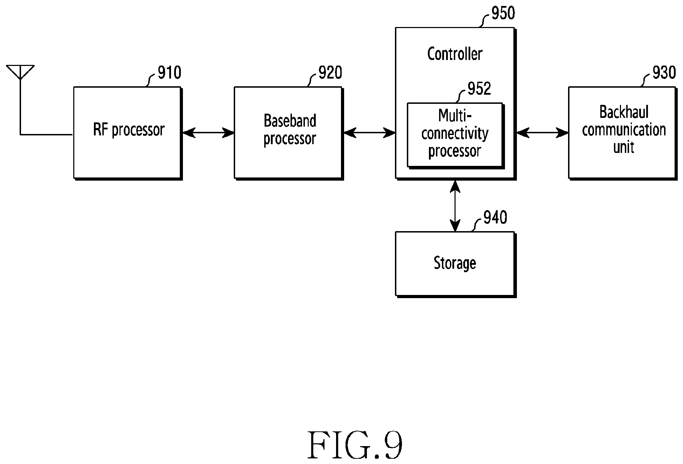

FIG. 9 is a block diagram illustrating a structure of a base station, applied to embodiments of the disclosure.

Referring to FIG. 9, the base station may include an RF processor 910, a baseband processor 920, a backhaul communication unit 930, a storage 940, and a controller 950.

The RF processor 910 may perform functions for transmitting/receiving signals through a radio channel, such as signal band conversion and amplification. That is, the RF processor 910 may up-convert a baseband signal provided from the baseband processor 920 to an RF band signal, may transmit the same through an antenna, and may down-convert an RF band signal received through the antenna to a baseband signal. For example, the RF processor 910 may include a transmission filter, a reception filter, an amplifier, a mixer, an oscillator, a DAC, and an ADC. Although only one antenna is illustrated in the drawing, the base station may include multiple antennas. In addition, the RF processor 910 may include multiple RF chains. Furthermore, the RF processor 910 may perform beamforming. For the beamforming, the RF processor 910 may adjust the phase and magnitude of signals transmitted/received through multiple antennas or antenna elements, respectively. The RF processor may transmit one or more layers to perform a downward MIMO operation.

The baseband processor 920 may perform functions of conversion between baseband signals and bitstrings according to the physical layer specifications of a first radio access technology. For example, during data transmission, the baseband processor 920 may encode and modulate a transmitted bitstring to generate complex symbols. In addition, during data reception, the baseband processor 920 may demodulate and decode a baseband signal provided from the RF processor 910 to restore a received bitstring. For example, when following the OFDM scheme, during data transmission, the baseband processor 920 may encode and modulate a transmitted bitstring to generate complex symbols, may map the complex symbols to subcarriers, and may configure OFDM symbols through IFFT operation and CP insertion. In addition, during data reception, the baseband processor 920 may split a baseband signal provided from the RF processor 910 at the OFDM symbol level, may restore signals mapped to subcarriers through FFT operation, and may restore a received bitstring through demodulation and decoding. The baseband processor 920 and the RF processor 910 transmit and receive signals as described above. Therefore, the baseband processor 920 and the RF processor 910 may be referred to as a transmitter, a receiver, a transceiver, or a communication unit.

The backhaul communication unit 930 provides an interface for communicating with other nodes in the network. That is, the backhaul communication unit 930 converts bitstrings transmitted from the main base station to other nodes, for

example, an auxiliary base station, a core network, etc., into physical signals, and converts physical signals received from the other nodes into bitstrings.

The storage 940 stores basic programs, application programs, and data, such as configuration information, for operation of the main base station. Particularly, the storage 940 may store information regarding a bearer allocated to a connected UE, a measurement result reported from the connected UE, and the like. In addition, the storage 940 may store information serving as a criterion to determine whether to provide multi-connectivity to a UE or to suspend the same. In addition, the storage 940 provides the stored data at the request of the controller 950.

The controller 950 controls the overall operation of the main base station. For example, the controller 950 transmits/receives signals through the baseband processor 920 and the RF processor 910 or through the backhaul communication unit 930. In addition, the controller 950 records data in the storage 940 and reads the data from the storage 940. To this end, the controller 950 may include at least one processor, and may include a multi-connectivity processor 952 as illustrated in the drawing. The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

It should be noted that the above-described configuration diagrams, illustrative diagrams of control/data signal transmission methods, illustrative diagrams of operation procedures, and structural diagrams are not intended to limit the scope of the disclosure. That is, all constituent elements, entities, or operation steps described in the embodiments of the disclosure should not be construed as being essential for the implementation of the disclosure, and the disclosure may be implemented without impairing the essential features of the disclosure by including only some constituent elements. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be

apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the 5G or NR system, other variants based on the technical idea of the embodiments may also be implemented in other communication systems such as LTE, LTE-A, or LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

**1.** A method performed by a terminal in a wireless communication system, the method comprising:

receiving configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration; and

transmitting, to a first node associated with the SRB indicated by the first information, the QoE measurement report including the information on the start or the end of the measurement session related to the QoE measurement configuration,

wherein the information on the start or the end of the measurement session related to the QoE measurement configuration is forwarded to a second node associated with the first node, based on dual connectivity (DC).

**2.** The method of claim 1, wherein, in case that the first node is a master node (MN), the second node is a secondary node (SN), and
wherein, in case that the first node is an SN, the second node is an MN.

**3.** The method of claim 2, wherein the information on the start or the end of the measurement session related to the QoE measurement configuration is included in a message based on an interface established between the first node and the second node and forwarded to the second node via the message.

**4.** The method of claim 2, wherein a configuration related to minimization of drive tests (MDT) measurement aligned with QoE measurement is transmitted from the second node to the terminal, based on the information on the start or the end of the measurement session related to the QoE measurement configuration.

**5.** A method performed by a first node in a wireless communication system, the method comprising:

transmitting, to a terminal, configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration, and the first node being associated with the SRB indicated by the first information; and

receiving, from the terminal, the QoE measurement report including the information on the start or the end of the measurement session related to the QoE measurement configuration,

wherein the information on the start or the end of the measurement session related to the QoE measurement configuration is forwarded to a second node associated with the first node, based on dual connectivity (DC).

**6.** The method of claim 5, wherein, in case that the first node is a master node (MN), the second node is a secondary node (SN), and
wherein, in case that the first node is an SN, the second node is an MN.

7. The method of claim 6, wherein the information on the start or the end of the measurement session related to the QoE measurement configuration is included in a message based on an interface established between the first node and the second node and forwarded to the second node via the message.

8. The method of claim 6, wherein a configuration related to minimization of drive tests (MDT) measurement aligned with QoE measurement is transmitted from the second node to the terminal, based on the information on the start or the end of the measurement session related to the QoE measurement configuration.

9. A terminal in a wireless communication system, the terminal comprising:

a transceiver; and
a controller connected to the transceiver,
wherein the controller is configured to:

receive configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration; and
transmit, to a first node associated with the SRB indicated by the first information, the QoE measurement report including the information on the start or the end of the measurement session related to the QoE measurement configuration, and
wherein the information on the start or the end of the measurement session related to the QoE measurement configuration is forwarded to a second node associated with the first node, based on dual connectivity (DC).

10. The terminal of claim 9, wherein, in case that the first node is a master node (MN), the second node is a secondary node (SN), and
wherein, in case that the first node is an SN, the second node is an MN.

11. The terminal of claim 10, wherein the information on the start or the end of the measurement session related to the QoE measurement configuration is included in a message based on an interface established between the first node and the second node and forwarded to the second node via the message.

12. The terminal of claim 10, wherein a configuration related to minimization of drive tests (MDT) measurement aligned with QoE measurement is transmitted from the second node to the terminal, based on the information on the start or the end of the measurement session related to the QoE measurement configuration.

13. A first node in a wireless communication system, the first node comprising:

a transceiver; and
a controller connected to the transceiver,
wherein the controller is configured to:

transmit, to a terminal, configuration information related to a quality of experience (QoE) measurement configuration, the QoE measurement configuration including first information indicating a signaling radio bearer (SRB) through which a QoE measurement report related to the QoE measurement configuration is transmitted, and second information indicating the terminal to report information on a start or an end of a measurement session related to the QoE measurement configuration, and the first node being associated with the SRB indicated by the first information; and
receive, from the terminal, the QoE measurement report including the information on the start or the end of the measurement session related to the QoE measurement configuration, and
wherein the information on the start or the end of the measurement session related to the QoE measurement configuration is forwarded to a second node associated with the first node, based on dual connectivity (DC).

14. The first node of claim 13, wherein, in case that the first node is a master node (MN), the second node is a secondary node (SN), and
wherein, in case that the first node is an SN, the second node is an MN.

**15.** The first node of claim 14, wherein the information on the start or the end of the measurement session related to the QoE measurement configuration is included in a message based on an interface established between the first node and the second node and forwarded to the second node via the message.

105
125
AMF
MME
110
130
120
135
gNB
eNB
115
NR UE

FIG.1

205
NR RRC_CONNECTED
210
Resume/Release with suspend
215
NR RRC_INACTIVE
225
Establishment/ Release
220
Release
230
NR RRC_IDLE

FIG.2

UE APP
345
UE AS
305
NG-RAN
315
CN
325
OAM
320
TCE/MCE
365
Capability information
310
Configure QoE measurement QoE measurement configuration
330
Activate QoE measurement QoE measurement configuration
335
RRC Message QoE measurement configuration
340
AT Command QoE measurement configuration
350
AT Command QoE report
355
RRC Message QoE report
360
QoE Report
370


FIG.3

TCE/MCE
OAM
405
NG-RAN
410
UE AS
UE APP
415
Activate QoE
QoE measurement
configuration
425
Capability
information
420
RRC Message
QoE measurement
configuration
430
AT Command
QoE measurement
configuration
435
AT Command
QoE report
440
RRC Message
QoE report
QoE Report
445

FIG.4

NG-RAN
UE AS
UE APP
Capability information
505
510
RRC Message
QoE measurement configuration and/or RVQoE configuration
515
AT Command
QoE measurement configuration and/or RVQoE configuration
AT Command
QoE report and/or RVQoE report
520
RRC Message
QoE report and/or RVQoE report
525

FIG.5

610
gNB
RRC
PDCP
RLC
MAC
PHY
SRB 0/1/2
SRB 4
605
UE

FIG.6

710
MN
RRC
PDCP
RLC
MAC
PHY
715
SN
RRC
PDCP
RLC
MAC
PHY
720
SRB 1S
SRB 2S
SRB 0/1/2
SRB 4
SRB 3
SRB 5
UE
705

FIG.7

840
Controller
842
Multi-connectivity processor
820
Baseband processor
810
RF processor
830
Storage

FIG.8

950
Controller
952
Multi-connectivity processor
910
RF processor
920
Baseband processor
930
Backhaul communication unit
940
Storage

FIG.9

# INTERNATIONAL SEARCH REPORT

International application No. **PCT/KR2024/014166**

**A. CLASSIFICATION OF SUBJECT MATTER**

**H04W 24/08**(2009.01)i; **H04W 24/10**(2009.01)i; **H04W 76/15**(2018.01)i; **H04L 41/5067**(2022.01)i

According to International Patent Classification (IPC) or to both national classification and IPC

**B. FIELDS SEARCHED**

Minimum documentation searched (classification system followed by classification symbols)

H04W 24/08(2009.01); H04L 41/0806(2022.01); H04L 41/5067(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: QoE(quality of experience), 측정(measurement), 설정(configuration), 시그널링 무선 베어러(signaling radio bearer, SRB), 시작(start), 종료(stop), 보고(report), DC(dual connectivity)

**C. DOCUMENTS CONSIDERED TO BE RELEVANT**

| Category* | Citation of document, with indication, where appropriate, of the relevant passages | Relevant to claim No. |
|---|---|---|
| Y | SAMSUNG. Discussion on QoE measurement for NR-DC. R2-2310456, 3GPP TSG-RAN2 WG2 Meeting #123b. Xiamen, China. 17 October 2023. See sections 2.1-2.2. | 1-15 |
| Y | ERICSSON. Measurement status issue in conditional handovers and UE capabilities for QoE. R2-2310754, 3GPP TSG-RAN2 WG2 Meeting #123b. Xiamen, China. 17 October 2023. See sections 2.1-2.2. | 1-15 |
| A | HUAWEI et al. QoE continuity between LTE-5GC and NR. R2-2300603, 3GPP TSG RAN2 #121. Athens, Greece. 17 February 2023. See sections 1-2.3. | 1-15 |
| A | SAMSUNG. Correction on buffer levels and storing QoE reports. R2-2307921, 3GPP TSG RAN WG2 Meeting #123. Toulouse, France. 11 August 2023. See pages 1-8. | 1-15 |
| A | KR 10-2023-0151521 A (LENOVO (SINGAPORE) PTE. LTD.) 01 November 2023 (2023-11-01) See paragraphs [0037]-[0208]; and figures 1-12. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 December 2024** | **26 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/014166**

| Patent document cited in search report | Publication date (day/month/year) | Patent family member(s) | Publication date (day/month/year) |
|---|---|---|---|
| KR 10-2023-0151521 A | 01 November 2023 | BR 112023017309 A2 | 26 September 2023 |
| | | CA 3205711 A1 | 01 September 2022 |
| | | CN 116888943 A | 13 October 2023 |
| | | EP 4298775 A1 | 03 January 2024 |
| | | JP 2024-507962 A | 21 February 2024 |
| | | US 2024-0137294 A1 | 25 April 2024 |
| | | WO 2022-180619 A1 | 01 September 2022 |

Form PCT/ISA/210 (patent family annex) (July 2022)